# EUROPÄISCHE PATENTSCHRIFT

(11) **EP 1 994 536 B1**
(45) Veröffentlichungstag und Bekanntmachung des Hinweises auf die Patenterteilung: **12.03.2014**
(21) Anmeldenummer: 07702981.7
(22) Anmeldetag: 24.01.2007
(51) Int. Cl.: G21C 9/008, G21C 9/06, G21D 3/04, F16K 17/00, F16K 17/14, F16K 17/38, F24F 7/00

(54) **KERNTECHNISCHE ANLAGE SOWIE VERSCHLUSSVORRICHTUNG FÜR DEREN SICHERHEITSBEHÄLTER**
NUCLEAR ENGINEERING PLANT AND CLOSURE APPARATUS FOR ITS CONTAINMENT
INSTALLATION NUCLÉAIRE ET DISPOSITIF DE FERMETURE POUR SES CUVES DE SÉCURITÉ

(30) Priorität: 07.03.2006 DE 102006010826
(43) Veröffentlichungstag der Anmeldung: 26.11.2008
(73) Patentinhaber: AREVA GmbH, 91052 Erlangen (DE)
(72) Erfinder: ECKARDT, Bernd, 63067 Offenbach (DE); LOSCH, Norbert, 63067 Offenbach (DE)
(74) Vertreter: Tergau & Walkenhorst
(86) Internationale Anmeldenummer: PCT/EP2007/000572
(87) Internationale Veröffentlichungsnummer: WO 2007/101504

(56) Entgegenhaltungen:
- EP-A- 0 973 172
- DE-A1- 1 614 631
- DE-A1- 2 264 232
- DE-A1- 2 356 398
- DE-A1- 3 248 052
- DE-A1- 10 045 637
- DE-A1- 19 625 405
- DE-B1- 2 513 822
- FR-A1- 2 355 139
- GB-A- 2 181 786
- JP-A- 2 098 690
- US-A- 3 937 651
- US-A- 4 006 780
- US-A- 5 740 217
- DATABASE WPI Week 198330 Derwent Publications Ltd., London, GB; AN 1983-721304 XP002434014 & SU 958 757 A (UNIV ROST) 15. September 1982 (1982-09-15)
- DATABASE WPI Week 197449 Derwent Publications Ltd., London, GB; AN 1974-85431V XP002434015 & SU 404 877 A (NON FERROUS METALS ALLOY) 10. Juli 1974 (1974-07-10)

## Beschreibung

Die Erfindung betrifft eine kerntechnische Anlage, insbesondere einen Druckwasserreaktor, mit einem Sicherheitsbehälter, dessen Innenraum durch eine gasdichte Zwischenwand in einen den Reaktordruckbehälter und den Primärkühlkreislauf enthaltenden Anlagenraum und in einen im Normalbetrieb begehbaren Betriebsraum unterteilt ist, wobei in der Zwischenwand eine Mehrzahl von Überströmöffnungen vorgesehen ist. Sie betrifft weiterhin eine Verschlussvorrichtung für eine in der Zwischenwand angeordnete Überströmöffnung.

Im Rahmen der sicherheitstechnischen Auslegung einer Kernkraftanlage ist in der Regel der den Reaktorkern umschließende Reaktordruckbehälter in einem Sicherheitsbehälter angeordnet. In dem Sicherheitsbehälter sind eine Vielzahl von redundanten und diversitären Sicherheitsvorrichtungen vorgesehen, durch welche eine sichere Kühlung des Reaktorkerns bei Störungen des normalen Betriebes der Kernkraftanlage, insbesondere bei einem Verlust an Kühlmittel des Reaktorkerns, gewährleistet ist. Der Sicherheitsbehälter gewährleistet zudem als eine gasdichte Hülle, die häufig gegenüber der Umgebung auf einem Unterdruck gehalten wird, dass selbst bei einer Betriebsstörung keine Radioaktivität in die Umgebung gelangt. Der Sicherheitsbehälter mitsamt der von ihm eingeschlossenen Atmosphäre wird auch als Containment bezeichnet.

In der Mehrzahl der bislang verwirklichten Anlagen sind so genannte Einraum-Containments ohne eindeutige Trennung der Innenvolumina vorgesehen, die im Normalbetrieb nicht begehbar sind. Dadurch sind im Sicherheitsbehälter anfallende Prüf- und Wartungsarbeiten erschwert. Soll der Innenraum des Sicherheitsbehälters betreten werden, so muss der Reaktor im Regelfall rechtzeitig vorher heruntergefahren und die Containment-Atmosphäre dekontaminiert werden, was längere Stillstandszeiten nach sich ziehen kann.

Zur Umgehung derartiger Schwierigkeiten wurden bereits so genannte Zweiraum-Containments vorgeschlagen, bei denen der Innenraum des Sicherheitsbehälters durch eine gasdichte Zwischenwand, in der Regel eine Betonzwischenwand, in einen den Reaktordruckbehälter und den Primärkühlkreislauf enthaltenden Anlagenraum und in einen davon strahlen- und lüftungstechnisch abgeschirmten Betriebsraum unterteilt ist, der auch während des Leistungsbetriebes begehbar ist. Der Anlagenraum mit den aktiven und hochenergetischen, höher kontaminierten Primärkreiskomponenten ist also bei diesem Konzept während des Normalbetriebes konsequent von den übrigen, begehbaren und daher für Wartungszwecke zugängigen Containmentbereichen, dem so genannten Betriebsraum, separiert und abgeschirmt.

In Störfall- und insbesondere Unfallsituationen mit erhöhten Kerntemperaturen, die beispielsweise auf ein Leck im primären Kühlkreislauf zurückgehen können, kann unter Umständen eine massive Freisetzung von Dampf und explosiven Gasen, vornehmlich Wasserstoff, in die inneren abgetrennten Raumbereiche des Sicherheitsbehälters erfolgen. Gerade bei einem Zweiraum-Containment der oben beschriebenen Art kann dann innerhalb des vergleichsweise kleinen Volumens des Anlagenraumes ein relativ rascher Druckanstieg und eine starke Konzentrierung zündfähiger Gase erfolgen. Aber auch bei kleineren Leckquerschnitten, die nur zu einem vergleichsweise langsamen Druckaufbau im Anlagenraum führen, können sich aufgrund des eingeschränkten Ausdehnungsvolumens lokal begrenzt kritische Konzentrationen zündfähiger Gase bzw. explosive Gasgemische einstellen.

In derartigen Störfall- oder Unfallfallsituationen wird daher eine effektive Verteilung der Störfallatmosphäre im gesamten Containment-Volumen angestrebt, welche die lokalen und globalen Maximalkonzentrationen zündfähiger Gase begrenzt. Zu diesem Zweck waren bislang vor allem mit Berstscheiben verschlossene Überströmöffnungen in der Zwischenwand zwischen Anlagenraum und Betriebsraum vorgesehen, die beim Erreichen des Berstdrucks öffnen. Da bei der Auslegung und Fertigung der Berstelemente gewisse Schwankungen in der Bersttoleranz unvermeidlich sind, hat die beschriebene Lösung jedoch den Nachteil, dass gerade bei den wahrscheinlicheren Störfallsituationen mit kleineren Lecks und langsamem Druckaufbau in der Regel nur dasjenige Berstelement mit dem geringsten individuellen Berstdruck öffnet. Der so herbeigeführte Druckausgleich verhindert in der Regel das Öffnen der übrigen Berstelemente. In Folge der nur partiellen Raumöffnung ist die konvektive Verteilung der detonationsfähigen Gase stark eingeschränkt, so dass das Explosionsrisiko durch einen verstärkten Einsatz von Inertisierungsvorrichtungen und Rekombinatoren oder dergleichen verringert werden muss. Derartige Maßnahmen sind in der Regel vergleichsweise aufwändig und teuer und in Bezug auf das erreichbare Sicherheitsniveau als nicht optimal anzusehen.

Andere bereits angedachte und zum Teil verwirklichte Sicherheitskonzepte sehen zusätzlich oder alternativ zu den Berstscheiben handbetätigte Klappen vor, die durch Seilzüge oder auch elektromotorisch vom außerhalb des Sicherheitsbehälters stationierten Bedienpersonal betätigt bzw. aktiviert werden können, um so im Notfall die Überströmquerschnitte freizugeben. Handbetätigte Notfalleinrichtungen erweisen sich aber in vielen Störfallszenarien, insbesondere bei solchen mit einer sehr frühzeitigen Wasserstofffreisetzung, als zu langsam und zu unsicher und sind auch wegen des hohen erforderlichen Aufwandes in der Anzahl und im Öffnungsquerschnitt stark begrenzt. Generell sollten etwaige Fehlbedienungen, die auf menschlichem Versagen oder auf situationsbedingten Fehleinschätzungen beruhen, in einer sicherheitskritischen Anlage wie einem Kernkraftwerk von vornherein ausgeschlossen sein. Alternativlösungen mit motorgetriebenen Verschlussklappen sind wegen ihrer Abhängigkeit von einer intakten Energieversorgung problematisch. Außerdem sind diese motorgetriebenen Verschlussklappen im Falle großer Bruchquerschnitte hochenergetischer Rohrleitungen wegen der verzögerten Öffnung zur Druckentlastung nicht wirksam, und durch den erheblichen Platzbedarf (Antrieb, Getriebe, etc.) stehen relevante Einbauflächen für Druckentlastungselemente nicht zur Verfügung. Durchgeführte detaillierte H2-Verteilungs- und Druckaufbauanalysen in Unfallsituationen mit massiven H2-Freisetzungen unter Nutzung vorgenannter Einrichtungen bestätigen diese Problematik grundsätzlich.

Ähnliche sicherheitstechnische Vorrichtungen sind aus DE2356398, SU958757, SU404877, EP0973172, US40067890, DE10045637,GB2181786, DE19625405, DE1614631, US5740217, FR2355139, JP02098690, US3937651, DE3248052, DE2513822 und DE2264232 bekannt.

Der Erfindung liegt die Aufgabe zugrunde, eine kerntechnische Anlage der eingangs genannten Art anzugeben, die bei gering gehaltenem Herstellungs- und Betriebsaufwand eine besonders hohe betriebliche Sicherheit, insbesondere auch bei Störfallsituationen mit relevanter Wasserstofffreisetzung im Kernbereich oder Primärkühlkreislauf, gewährleistet. Es soll weiterhin eine für einen Einsatz in einer derartigen Anlage besonders geeignete Verschlussvorrichtung für eine in der Zwischenwand zwischen Anlagenraum und Betriebsraum angeordnete Druckentlastungs- und Überströmöffnung angegeben werden.

Bezüglich der kerntechnischen Anlage wird die Aufgabe erfindungsgemäß durch den Gegenstand des Anspruches 1 gelöst.

Die Erfindung geht von der Überlegung aus, dass bei einer kerntechnischen Anlage der eingangs genannten Art auch bei einem Störfall mit gegebenenfalls massiver Freisetzung von Dampf und brennbaren oder explosiven Gasen die lokalen und globalen Maximalkonzentrationen dieser Gase bereits bauart- und auslegungsbedingt möglichst niedrig gehalten werden sollten. Detonationsfähige Gemische, die die Integrität des Sicherheitsbehälters gefährden könnten, sollten gar nicht erst entstehen können. Bei einem innerhalb des Anlagenraumes auftretenden Störfall sollte daher eine schnelle Raumöffnung erfolgen zum Zwecke der effektiven Verteilung der Störfallatmosphäre und Begrenzung der Gaskonzentrationen im gesamten Containment-Volumen. Die in den Überströmöffnungen der Zwischenwand angeordneten Verschlussvorrichtungen, die im geschlossenen Zustand die normalbetriebliche Raumseparierung und lüftungs- und strahlenschutztechnische Trennung von Anlagenraum und Betriebsraum sicherstellen, sollten überdies gemäß den Auslegungsprinzipien Diversität, Passivität, Redundanz und Ausfallsicherheit derart konstruiert sein, dass beim Eintritt eines Störfalls eine automatische, selbsttätige und vorzugsweise fremdenergiefreie Öffnung bzw. Freigabe der Überströmquerschnitte erfolgt.

Für eine besonders effektive Verteilung der störfallbedingt freigesetzten Gase und ihre Vermischung mit der gesamten restlichen Containment-Atmosphäre sowie eine effektiven Druckentlastung der Anlagenräume bei großen Rohrleitungsbrüchen sollten nicht nur einzelne, sondern mehrere, idealerweise viele oder sogar alle Verschlusselemente zeitgleich oder zumindest zeitnah die normalbetrieblich von ihnen versperrten Strömungswege freigeben. Dies sollte insbesondere auch bei vergleichsweise kleinen Lecks im Primärkreislauf und dem damit verbundenen langsamen Druckaufbau gelten. Dazu ist gemäß dem nunmehr vorliegenden Konzept zum einen vorgesehen, dass den voneinander unabhängigen Verschlussvorrichtungen jeweils eine störfallbezogene Auslösebedingung zugeordnet ist, die die spezifischen Umgebungsverhältnisse, Betriebsparameter und Einflussfaktoren am jeweiligen Einsatzort, d. h. am Ort der jeweiligen Überströmöffnung, berücksichtigt. Zum anderen ist neben einem rein druckabhängigen Auslösemechanismus, der beispielsweise auf einfache Art durch eine herkömmliche Berstfolie oder dergleichen verwirklicht sein kann, oder alternativ dazu zumindest bei einem Teil der Verschlussvorrichtungen zumindest ein weiteres, druckunabhängigen Auslöseprinzip vorgesehen. Durch eine derart diversitäre Auslegung der Verschlussvorrichtungen bzw. der ihnen zugeordneten Auslösevorrichtungen und durch die auf die jeweilige Überströmöffnung abgestimmte Wahl der Auslöseparameter, der Schwellwerte, der Sensibilitäten etc. wird erreicht, dass nicht nur bei einem einzelnen, sondern bei einer Vielzahl voneinander unabhängiger, dezentral auslösender Verschlussvorrichtungen ein frühzeitiges und beinahe simultanes Ansprechen bereits auf vergleichsweise harmlose Störfallsituationen erfolgt.

Zur Verwirklichung der angestrebten Diversität kann die kerntechnische Anlage mindestens zwei Arten von Verschlussvorrichtungen aufweisen, bei denen sich die dem Auslösevorgang und/oder dem Betätigungsvorgang jeweils zugrunde liegenden Wirkprinzipien voneinander unterscheiden. Alternativ oder zusätzlich kann aber auch mindestens eine Verschlussvorrichtung vorgesehen sein, in der mehrere auf unterschiedlichen Wirkprinzipien beruhende Auslösevorrichtungen vereint sind.

Möglich ist auch eine kerntechnische Anlage, bei der neben den druckabhängig öffnenden Verschlussvorrichtungen temperaturabhängig öffnende Verschlussvorrichtungen vorgesehen sind. Bei einem langsamen Druckanstieg im Anlagenraum öffnen nämlich bei Erreichen des individuellen Auslösedrucks oder Berstdrucks in der Regel nur eine oder wenige der drucksensitiven Verschlussvorrichtungen oder Berstelemente, was für sich genommen eine nur unzulängliche Raumöffnung und Vermischung der Containment-Atmosphäre nach sich ziehen könnte. Da während eines Störfalls üblicherweise auch gleichzeitig die Temperatur im Anlagenraum ansteigt, z. B. durch den Austritt von heißem Dampf aus einem Leck im Primärkreislauf, werden durch die temperatursensitiven Verschlussvorrichtungen weitere Überströmquerschnitte freigegeben, so dass eine effektive Verteilung der Störfallatmosphäre bewirkt wird.

Eine Verschlussvorrichtung kann derart ausgelegt sein, dass sie selbsttätig öffnet, sobald der Atmosphärendruck im Anlagenraum einen vorgegebenen Auslösedruck übersteigt. Anstelle einer auf einen Absolutwert des Druckes bezogenen Auslösebedingung kann auch ein relatives Kriterium vorgesehen sein, derart, dass mindestens eine Verschlussvorrichtung selbsttätig öffnet, sobald die Druckdifferenz zwischen Anlagenraum und Betriebsraum einen vorgegebenen Auslösewert überschreitet. Erfindungsgemäß beträgt der Auslösewert etwa 20 mbar bis 300 mbar.

Weiterhin ist mindestens eine Verschlussvorrichtung derart ausgelegt, dass sie selbsttätig öffnet, sobald die lokale Atmosphärentemperatur an einer Messposition des Anlagenraumes eine vorgegebene Auslösetemperatur übersteigt. Idealerweise ist die zugehörige temperaturabhängige Auslöse- oder Entriegelungsvorrichtung in die Verschlussvorrichtung integriert, d. h. die Messposition befindet sich unmittelbar am Einbauort der Verschlussvorrichtung bzw. an oder in der Überströmöffnung. Alternativ oder zusätzlich kann aber auch mindestens eine Verschlussvorrichtung vorgesehen sein, bei der ein Verschlusselement über eine Fernbetätigungsvorrichtung an eine in der Nähe der Decke des Anlagenraumes positionierte temperaturabhängige Auslösevorrichtung gekoppelt ist. Günstigerweise kann dabei ein im unteren Bereich des Anlagenraumes angeordnetes Verschlusselement durch eine in höherer Lage angeordnete Schmelzloteinrichtung oder dergleichen betätigt oder entriegelt werden, so dass die bei Temperaturstratifikation (Temperaturschichtung) in den oberen Bereichen auftretenden höheren Temperaturen zur eindeutigen Auslösung und sicheren Öffnung auch der tiefer liegenden Überströmeinrichtungen genutzt werden.

Die Auslösetemperatur ist zweckmäßigerweise auf die normalbetrieblich vorgesehene Raumtemperatur im Anlagenraum, die vorteilhafterweise durch eine Umluftkühlanlage unterhalb von 60 °C gehalten wird, abgestimmt. Sie ist erfindungsgemäß aus dem Intervall von etwa 65 °C bis 90 °C gewählt. In einer besonders zweckmäßigen Ausgestaltung sind die Auslösetemperaturen der temperaturabhängig öffnenden Verschlussvorrichtungen mit deren Einbauhöhe ansteigend oder gestaffelt gewählt, z. B. von 65 °C bis 90 °C, wodurch der Temperaturstratifikation im Anlagenraum Rechnung getragen wird. Somit wird auch in diesem Fall ein schnelles und annähernd zeitgleiches Öffnen aller Verschlussvorrichtungen begünstigt.

In einer möglichen Weiterbildung ist mindestens eine Verschlussvorrichtung derart ausgelegt, dass sie selbsttätig öffnet, sobald die Konzentration eines in der Atmosphäre des Anlagenraumes anwesenden brennbaren oder explosionsfähigen Gases, insbesondere die Wasserstoffkonzentration, eine vorgegebene Auslösekonzentration überschreitet. Neben einer druck- und temperatursensitiven Auslösung ist also eine weitere Diversifikation der Auslösekriterien verwirklicht, indem die Konzentration der zündfähigen Gase überwacht wird, wobei das Überschreiten eines vorgegebenen Grenzwertes zur automatischen Öffnung der die Überströmquerschnitte im Normalbetrieb verschließenden Verschlussvorrichtungen führt. Günstigerweise beträgt die Auslösekonzentration etwa 1 bis 4 Volumenprozent H2.

In einer Ausgestaltung lässt sich eine derart konzentrationssensitive Auslösung realisieren, indem ein bei Anwesenheit explosiver oder zündfähiger Gase Wärme freisetzendes katalytisches Element oder ein H₂-Rekombinator derart in der Nähe einer temperaturabhängig öffnenden Verschlussvorrichtung oder einer ihr zugeordneten temperatursensitiven Auslösevorrichtung angeordnet ist, dass die von ihm freigesetzte Wärme bei Überschreiten eines Schwellwertes die Öffnung der Verschlussvorrichtung auslöst. Beispielsweise erfolgt die Anordnung des jeweiligen Rekombinators knapp unterhalb einer die Öffnung des Verschlusselementes initiierenden Schmelzlotöffnungseinrichtung, so dass die bei H₂-Anfall erhöhte Betriebstemperatur des Rekombinators diversitär - d. h. selbst bei ansonsten niedrigen Raumtemperaturen und unabhängig von einer etwaigen Dampffreisetzung - ein sicheres Öffnen des Überströmquerschnittes herbeiführt. Anstelle eines Rekombinators oder zusätzlich zu diesem kann beispielsweise auch ein katalytisches Element auf der Basis eines metallischen Trägers mit Washcoat-Beschichtung und den katalytisch wirksamen Materialien Platin und/oder Palladium vorgesehen sein. Beim Anfall von Wasserstoff wird durch die exotherme Reaktionswärme bereits bei einer Konzentration von 1 bis 4 Volumenprozent eine sichere Auslösung der temperatursensitiven Verschlussvorrichtung, auch unabhängig von der sonstigen Raumtemperatur, gewährleistet.

Weiterhin ist beispielsweise eine erste Teilmenge der jeweils mit einer der Verschlussvorrichtungen versehenen Überströmöffnungen im unteren Drittel, insbesondere im bodennahen Bereich des Anlagenraumes, und eine zweite Teilmenge in den höher liegenden Regionen, insbesondere in den die Decke des Anlagenraumes bildenden Abschnitten der Zwischenwand, angeordnet. Die Höhendifferenz zwischen den hoch-und tief liegenden Überströmöffnungen beträgt dabei beispielsweise mehr als 5 m, insbesondere mehr als 20 m, um durch den Dichteunteschied der Atmosphärensäulen zwischen Anlagen- und Betriebsräumen, in passiver Weise die Konvektionswalzen wirksam anzutreiben. Dabei ist zweckmäßigerweise zwischen den tiefer liegenden und den höher liegenden Überströmöffnungen eine Anzahl von Rekombinatoren an der Innenwand des Anlagenraumes angebracht. Durch die bei einem Störfall aufgrund des Ausfalls der Raumkühlung bzw. durch Dampffreisetzung entstehende Verringerung der Dichte wird die Kaminwirkung in den Anlagenräumen, die gegebenenfalls noch durch die Reaktionswärme der katalytischen Rekombinatoren verstärkt wird, zum Antrieb großflächiger Konvektionswalzen im Containment genutzt. Damit gelingt eine Erhöhung der Überströmgeschwindigkeiten auf 0,5 m/s bis 2 m/s oder mehr. Die Anordnung der Rekombinatoren wird dabei zweckmäßigerweise derart gewählt, dass eine verstärkte Reaktionswärmefreisetzung im so genannten Kaminbereich der Anlagenräume, d. h. in den oberen Regionen der Dampferzeugertürme und oberhalb der tief liegenden Überströmöffnungen erreicht wird. Auf diese Weise werden die Rekombinatoren nach der Raumöffnung mit erhöhter Eintrittsgeschwindigkeit angeströmt, was einen besonders effektiven Wasserstoffabbau begünstigt. Besonders zweckmäßig sind die Rekombinatoren derart angeordnet und innerhalb des Anlagenraumes verteilt, dass die H₂-Abbauleistung in den Anlagenräumen mehr als 20 % der H₂-Gesamtabbauleistung von beispielsweise mehr als 50 kg/h beträgt.

Große Druckentlastungsflächen werden durch die Kombination dieser Entlastungs- und Überströmelemente, die nun weitgehend alle druckabhängig öffnen können, möglich. Zweckmäßigerweise beträgt die von den Verschlusselementen insgesamt überdeckte Fläche ungefähr das 0,1- bis 0,5-fache der horizontalen Querschnittsfläche des Anlagenraumes. Dies führt auch bei großen Rohrleitungsbrüchen zu einer gravierenden Begrenzung der Differenzdruckbelastungen in den Anlagenräumen, so dass eine ebene Stahlträger Halte- und Dichtkonstruktion, auch bei nur begrenztem Lastabtrag (aufgrund der technisch möglichen Widerstandsmomente) ermöglicht ist. Auf diese Weise werden die bei schwerwiegenden Rohrleitungsbrüchen und großen Lecks auftretenden Druckbelastungen auf weniger als das 0,5-fache, insbesondere auf weniger als das 0,2-fache des Auslegungsdrucks für den Sicherheitsbehälter begrenzt. Zur Gewährleistung einer besonders effektiven Konvektion auch bei kleinen Lecks beträgt übendies die Gesamtfläche der Überströmöffnungen je Dampferzeugerturm zweckmäßigerweise mehr als 1 m², insbesondere mehr als 5 m².

Zweckmäßigerweise weist die kerntechnische Anlage eine Kühlvorrichtung insbesondere in Gestalt einer Umluftkühlanlage, zur Kühlung der im Anlagenraum befindlichen Raumluft auf, wobei die Kühlleistung der Kühlvorrichtung derart bemessen sein kann, dass die Raumtemperatur im Anlagenraum im Normalbetrieb dauerhaft auf weniger als 60 °C absenkbar ist. Durch die Kühlung wird insbesondere die im Normalbetrieb sich einstellende Kaminwirkung des gegenüber dem Betriebsraum und somit die auf die Dichtungen der Verschlusselemente einwirkende Druckdifferenz minimiert. Weiterhin umfasst die kerntechnische Anlage eine Absaugvorrichtung für die im Anlagenraum befindliche Raumluft sowie eine der Absaugvorrichtung strömungsseitig vor- oder nachgeschaltete Reinigungsvorrichtung zur Reinigung und Dekontamination der abgesaugten Raumluft. Normalbetrieblich wird somit durch die Absaugung der Raumluft aus dem Anlagenraum dort ein leichter Unterdruck von etwa 10 Pascal oder mehr gegenüber dem Betriebsraum erzeugt, wobei diese Druckdifferenz andererseits den zum Bersten der Berstelemente oder sonstigen druckabhängig öffnenden Verschlussvorrichtungen führenden Auslösewert nicht überschreiten darf. Die abgesaugte Raumluft wird in Aerosol- und Jodfiltern vor der Abgabe an die Umgebung weitestgehend gereinigt.

Eine zweckmäßige Verschlussvorrichtung für eine der Überströmöffnungen der kerntechnischen Anlage weist ein eine Berstfolie oder eine Berstscheibe umfassendes Verschlusselement auf, wobei die Verschlussvorrichtung derart ausgelegt ist, dass sie bei Erreichen einer vorgegebenen umgebungsseitigen Auslösetemperatur den Strömungsquerschnitt selbsttätig freigibt. Mit anderen Worten: Die beiden Funktionen "druckabhängiges Öffnen" und "temperaturabhängiges Öffnen" sind in einer einzigen Verschlussvorrichtung vereint, wobei die als passives Element konzipierte Verschlussvorrichtung bei Erreichen einer der beiden Auslösebedingungen (Auslösedruck oder Auslösetemperatur) selbsttätig, autonom, verzögerungsfrei und zweckmäßigerweise fremdenergiefrei (nach dem Fail-Safe-Prinzip) öffnet und den Überströmquerschnitt freigibt. Dies minimiert die für eine diversitäre Ausgestaltung der Öffnungsmechanismen erforderliche Anzahl an Verschlussvorrichtungen und ermöglicht die Unterbringung entsprechend großer Öffnungsflächen von Verschlusselementen in ebenen Deckenkonstruktionen. Weiterhin begrenzt eine derartige Konstruktion den bei maximalem Druckanstieg auf die jeweilige Vorrichtung wirkenden Differenzdruck, so dass eine besonders kostengünstige Konstruktion des jeweiligen Öffnungselementes und der durch den Differenzdruck belasteten Strukturen der Anlagenräume ermöglicht wird. Dabei ist die druckabhängige Öffnung in bewährter Weise durch eine das eigentliche Verschlusselement bildende oder in das Verschlusselement integrierte Berstfolie oder Berstscheibe verwirklicht.

Zweckmäßigerweise umfasst die jeweilige Verschlussvorrichtung eine im temperaturbedingten Auslösefall unmittelbar auf die Berstscheibe oder auf die Berstfolie einwirkende und zu deren Zerstörung oder Reißen führende Betätigungsvorrichtung. Beispielsweise handelt es sich dabei um eine federgetriebene Betätigungsvorrichtung. Weiterhin umfasst die Verschlussvorrichtung zweckmäßigerweise eine die Betätigungsvorrichtung vor dem Erreichen der Auslösetemperatur blockierende oder in ihrer Wirkung kompensierende Verriegelungsvorrichtung. Beispielsweise kann direkt und etwa mittig an der Berstfolie eine vorgespannte, jedoch im Normalbetrieb durch eine Schmelzloteinrichtung blockierte Zugfeder befestigt sein, so dass beim Erreichen der Schmelztemperatur die Zugfeder freigegeben wird, welche dann in Folge ihrer Entspannung die Berstfolie zerreißt.

Gemäß einer Alternativausführung kann die Berstscheibe oder die Berstfolie auch an einem drehbar oder schwenkbar an der Wand befestigten Rahmenelement befestigt oder eingespannt sein, wobei das Rahmenelement durch ein Verriegelungselement in der geschlossenen Stellung fixierbar ist, und wobei das Verriegelungselement derart ausgelegt oder an eine temperaturabhängige Auslösevorrichtung gekoppelt ist, dass es bei Erreichen der Auslösetemperatur entriegelt. Beispielsweise kann das Berstelement in einem Rahmenelement untergebracht sein, welches über eine Schmelzlotvorrichtung an eine ebene Trag- und Dichtkonstruktion angepresst wird. Bei Erreichen der Schmelztemperatur wird das komplette Rahmenelement freigegeben und öffnet durch die Schwerkraft und/oder Federkraft. Falls noch keine temperaturbedingte Auslösung stattgefunden hat, öffnet bei Erreichen des Berstdrucks alternativ die Berstfolie oder die Berstscheibe im Verschlusselement.

Die Schmelzlotvorrichtungen sind günstigerweise auf ein Halteelement oder wenige Halteelemente am Rahmen konzentriert und mit Spannelementen versehen. Durch die Konstruktion wird die Anpresskraft auf die Dichtelemente verteilt, so dass eine ausreichende Dichtigkeit erzielt wird und eine einfache Funktionsüberprüfung bzw. ein einfacher Austausch ermöglicht ist.

Bei einer weiteren Variante erfolgt die Auslösung und Öffnung des Verschlusselementes mittels einer entfernt vom Verschlusselement angeordneten Auslösevorrichtung, die im Auslösefall über eine mechanische oder pneumatisch/hydraulische Fernbetätigungsvorrichtung auf das Verschlusselement oder das zugehörige Verriegelungselement einwirkt. Beispielsweise kann eine ein Schmelzlot oder eine Schmelzkapsel umfassende Auslösevorrichtung in den höheren Regionen des Anlagenraumes angebracht sein, wobei die Auslösung über einen Seilzug oder ein gespanntes Federelement oder dergleichen auf ein tiefer liegendes Verschlusselement übertragen wird. Bei einem alternativen System wird im Auslösefall eine an einen Druckspeicher oder an ein oder mehrere hydraulische Reservoirs angeschlossene und normalbetrieblich durch eine Schmelzkapsel oder ein Schmelzlot verschlossene Rohrleitung freigegeben, so dass in Folge der einsetzenden Druckbeaufschlagung ein entfernt angeordnetes Verschlusselement entriegelt bzw. geöffnet wird.

Zweckmäßigerweise ist das Verschlusselement derart konstruiert und an der Wand befestigt, dass der Öffnungsvorgang durch das Eigengewicht des Verschlusselementes getrieben oder unterstützt wird. Dazu bietet sich ein horizontaler Einbau in der Decke an, wobei z. B. ein in der Art einer Verschlussklappe gestaltetes Verschlusselement mit einem oder mehreren Scharnieren an der Deckenwand oder einer sonstigen Tragkonstruktion befestigt ist und beim Öffnungsvorgang nach unten hin aufklappt.

Insbesondere bei einem vertikalen Einbau des Verschlusselementes ist es zweckmäßig, ein Federelement oder Federbein vorzusehen, das den Öffnungsvorgang unterstützt.

Alternativ oder additiv kann das Öffnen von Überströmquerschnitten auch durch motorbetätigte Überströmklappen erfolgen. Diese Klappen werden hierbei zweckmäßigerweise permanent motorisch geschlossen gehalten und öffnen durch Federkraft und/oder durch ihr Eigengewicht. Hierbei kann die Öffnung bei Erreichen eines vorgegebenen Absolut- oder Differenzdrucks oder bei Erreichen einer Auslösetemperatur über eine geeignete Mess- und Steuervorrichtung ausgelöst werden. Bei Spannungslosigkeit des Antriebsmotors oder der zugeordneten Leittechnik oder bei Erreichen des Auslösekriteriums (z. B. Druck, Temperatur oder Gaskonzentration) öffnet das Verschlusselement dann nach dem Fail-Safe-Prinzip sicher und fremdenergiefrei. Zur Begrenzung der Differenzdruckbelastung können derartige Verschlusselemente ebenfalls mit Berstfolien ausgestattet sein.

Günstig ist die Verwendung dieser motorbetätigten oder mit Hilfe von Motorkraft geschlossen gehaltenen Überströmklappen, die insbesondere als Jalousieklappen oder als Pendeldrehklappen mit Federrücklaufmotor ausgeführt sein können, vor allem im tief liegenden, temporär kalten Einströmbereich des Anlagenraumes bzw. der ihn vom Betriebsraum abgrenzenden Zwischenwand, insbesondere in Kombination mit den bereits weiter oben beschriebenen temperatur- und drucksensitiven, großflächigen Verschlussvorrichtungen in den hoch liegenden Überströmregionen.
Zur Sicherstellung einer ausreichenden Abschirmung im Einströmöffnungsbereich des Anlagenraumes sind der jeweiligen Einströmeinrichtung vorgelagerte Abschirmwände vorgesehen. Diese Abschirmeinrichtungen können auch radial ausgerichtet im unteren Drittel der Zwischenwand angeordnet sein. Der freie Konvektionsquerschnitt soll mindestens das Zweifache des Einströmquerschnitts betragen.

Zweckmäßigerweise ist die jeweilige Berstfolie oder Berstscheibe des Verschlusselementes derart ausgelegt, dass sie bei einer Beaufschlagung mit einem vorgegebenen Auslösedruck je nach Angriffsrichtung der Druckkraft zu beiden Seiten hin reißt oder aufbricht. Damit wird also auch bei einem äußeren Überdruck im Betriebsraum, hervorgerufen z. B. durch einen Bruch in einer sekundärseitigen Frischdampfleitung, eine Öffnung der Überströmquerschnitte ausgelöst. Weiterhin sind die Berstelemente zweckmäßigerweise derart konstruiert, dass bei Auftreffen von Strahlkräften keine relevanten, möglicherweise Sekundärschäden verursachenden Bruchstücke auftreten können. Deshalb werden die Berstfolien günstigerweise so konzipiert, dass sie in die eine Richtung durch Reißen der vorgesehenen Berstmaterialstege und in die Gegenrichtung primär durch Knicken brechen. Zur Abdichtung können zusätzlich leicht reißende Dichtfolien mit einer Dicke von weniger als 0,05 mm verwendet werden. Bei Auftreten von Unter- oder Überdrücken von 20 mbar bis 300 mbar öffnen die Berstfolien also günstigerweise in beide Richtungen.

Die mit der Erfindung erzielten Vorteile bestehen insbesondere darin, dass einerseits die aktiven und hochenergetischen Anlagenkomponenten einer kerntechnischen Anlage, insbesondere eines Druckwasserreaktors, normalbetrieblich von den umliegenden Betriebsräumen hermetisch abgeschirmt sind, welche damit für etwaig anfallende Prüf- und Wartungsarbeiten begehbar bleiben, dass andererseits in Störund Unfallsituationen mit der Gefahr der Freisetzung zündfähiger Gase eine schnelle, zuverlässige und großflächige und somit Raumöffnung unter Nutzung passiver, ausfallsicherer und auf diversitären Wirkprinzipien beruhender Elemente erfolgt. Die durch eine höhenmäßig gestaffelte Anordnung der Überströmquerschnitte optimierte konvektive Verteilung der freigesetzten Gase bewirkt auf besonders zuverlässige und einfache Weise eine Begrenzung der maximalen lokalen Konzentrationen, so dass detonationsfähige Gemische, die die Integrität des Sicherheitsbehälters gefährden könnten, sicher vermieden werden. Damit dient die Erfindung einer Erhöhung der Sicherheitsreserven in einem Kernreaktor bei gleichzeitig gravierender Reduktion des Aufwandes und der Kosten.

Ein Ausführungsbeispiel der Erfindung wird anhand einer Zeichnung näher erläutert. Darin zeigen:
- Fig. 1: schematisch einen Sicherheitsbehälter einer kerntechnischen Anlage im Längsschnitt,
- Fig. 2: eine bei einem Anlagenstörfall selbsttätig öffnende Verschlussvorrichtung für eine Überströmöffnung der kerntechnischen Anlage gemäß Fig. 1,
- Fig. 3: zwei verschiedenartige Verschlussvorrichtungen in kombinierter Anordnung,
- Fig. 4: eine in einer Wand der kerntechnischen Anlage gemäß Fig. 1 eingebaute druck- und temperatursensitive Verschlussvorrichtung, dargestellt in geöffnetem Zustand nach einer temperaturbedingten, mit Hilfe einer Fernlösevorrichtung bewirkten Auslösung,
- Fig. 5: die Fernauslösevorrichtung der Verschlussvorrichtung gemäß Fig. 4 vor dem Eintreten der Auslösefalls, und
- Fig. 6: die Verschlussvorrichtung gemäß Fig. 4 nach einer druckbedingten Auslösung.

Gleiche Teile sind in allen Figuren mit denselben Bezugszeichen versehen.

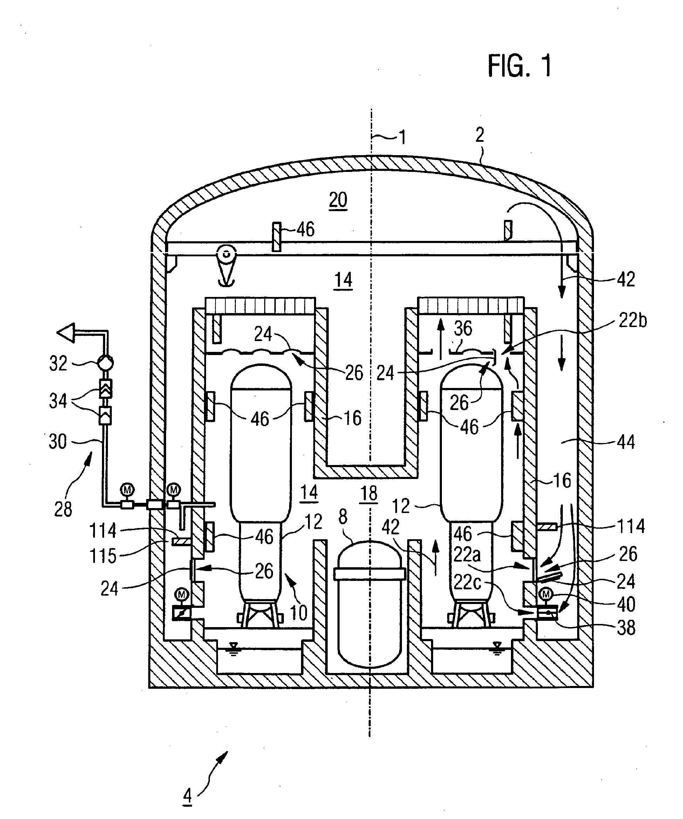

Fig. 1 zeigt in einem Längsschnitt einen sich im Wesentlichen symmetrisch zur Längsachse 1 erstreckenden Sicherheitsbehälter 2 einer kerntechnischen Anlage 4 mit einem Druckwasserreaktor. Der auch als Containment bezeichnete Sicherheitsbehälter 2 enthält in seinem Inneren die zur Erzeugung von heißem und unter Druck stehendem Wasserdampf vorgesehenen nuklearen Komponenten, insbesondere den Reaktordruckbehälter 8 und den daran angeschlossenen Primärkühlkreislauf 10 mit einer Anzahl von Dampferzeugern 12, sowie weitere Systemkomponenten. Die den Sicherheitsbehälter 2 bildende Schale verhindert auch bei einem vergleichsweise gravierenden betrieblichen Störfall Aktivitätsübertritte in die Umgebung, indem sie beispielsweise aus einem Leck im Primärkühlkreislauf 10 entweichendes Kühlmedium einschließt und zurückhält. Üblicherweise besteht die Schale des Sicherheitsbehälters 2 aus Stahl und ist zusätzlich von einem hier nicht gezeigten Betonmantel umgeben.

Die kerntechnische Anlage 4 ist für eine besonders hohe betriebliche Sicherheit ausgelegt, wobei gleichzeitig eine ausgesprochen wirtschaftliche Betriebsweise ermöglicht ist. Zu diesem Zweck ist der Innenraum 14 des Sicherheitsbehälters 2 durch eine gasdichte Zwischenwand 16 in einen den Reaktordruckbehälter 8 und den Primärkühlkreislauf 10, d. h. die aktiven und hochenergetischen Komponenten enthaltenden Anlagenraum 18 und in einen die übrigen, nur vergleichsweise schwach radioaktiv belasteten Systemkomponenten enthaltenden Betriebsraum 20 unterteilt. Der Anlagenraum 18 und der Betriebsraum 20 sind gegebenenfalls ihrerseits in weitere Teilräume unterteilt, was aber für das im Folgenden zu schildernde sicherheitstechnische Konzept und die zugehörigen Auslegungsgrundsätze nicht von grundsätzlicher Bedeutung ist. Die Zwischenwand 16 ist in der Regel vergleichsweise massiver Stahlbetonbauweise ausgeführt, so dass neben der lüftungsseitigen Separierung von Betriebsraum 20 und Anlagenraum 18 auch noch ein nicht unerheblicher Abschirmeffekt für die im Inneren des 18 freigesetzte Strahlung verwirklicht ist. Damit bleibt der Betriebsraum 20 auch während des Leistungsbetriebes der kerntechnischen Anlage 2 begehbar, ist also für etwa anfallende Prüf- und Wartungsarbeiten leicht zugänglich. Der Reaktorbetrieb muss in der Regel nur für Wartungsarbeiten an den hochenergetischen und höher kontaminierten nuklearen Komponenten innerhalb des 18 unterbrochen werden.

Im Rahmen eines betrieblichen Störfalls, hervorgerufen oder begleitet z. B. durch ein Leck im Primärkühlkreislauf 10, könnte es neben einer Freisetzung von heißem Dampf auch zu einer Freisetzung von relevanten Mengen an zündfähigem und möglicherweise explosiven Gasen, insbesondere Wasserstoff, in den Anlagenraum 18 kommen. Da das Volumen des 18 vergleichsweise klein gehalten ist, würden dabei unter Umständen nach einer gewissen Zeit kritische Konzentrationen überschritten, bei denen mit einer erhöhten Explosionsgefahr gerechnet werden müsste. Um derartige kritische Zustände von vornherein sicher auszuschließen ist in der den Anlagenraum 18 vom Betriebsraum 20 trennenden Zwischenwand 16 eine Anzahl von Überströmöffnungen 22a, 22b, 22c angeordnet, die normalbetrieblich durch ihnen jeweils zugeordnete Verschlusselemente 24 gasdicht verschlossen sind, jedoch im Falle eines Störfalls oder eines Havariezustandes im Anlagenraum 18 den jeweiligen Überströmquerschnitt frühzeitig und zwecks einer effektiven Verteilung der Störfallatmosphäre im gesamten Sicherheitsbehälter 2 freigeben. Das jeweilige Verschlusselement 24 ist Bestandteil einer passiven Verschlussvorrichtung 26, die beim Erreichen oder Überschreiten einer als Störfallindikator angesehenen Auslösebedingung selbsttätig und fremdenergiefrei die Öffnung des Überströmquerschnittes bewirkt.

Im Normalbetrieb wird im Anlagenraum 18 durch Absaugung der dort befindlichen Atmosphäre ein leichter Unterdruck gegenüber dem Betriebsraum 20 erzeugt; die Druckdifferenz beträgt dabei ca. 10 Pa bis maximal 1000 Pa. Zum Zweck der Luftabsaugung ist die in Fig. 1 mit 28 bezeichnete Absaugvorrichtung vorgesehen, die eine durch die Zwischenwand 16 und durch den Sicherheitsbehälter 2 hindurch vom Anlagenraum 18 ins Freie geführte Absaugleitung 30 mit einer daran angeschlossenen Saugpumpe 32 umfasst. Vor dem Entweichen in die Umgebung wird die aus dem Anlagenraum 18 abgesaugte Raumluft mit Hilfe einer mehrstufigen, in die Absaugleitung 30 geschalteten Reinigungsvorrichtung 34, die eine Anzahl von Aerosolund Jodfiltern umfasst, gereinigt und dekontaminiert. Weiterhin wird die im Anlagenraum 18 anfallende Wärme durch eine hier nicht näher dargestellte Umluftkühlanlage kontinuierlich abgeführt, so dass die Raumtemperatur im Anlagenraum 18 normalbetrieblich unterhalb eines Maximalwertes von etwa 60°C liegt.

Bei einem auf ein Leck im Primärkühlkreislauf 10 zurückzuführenden Störfall kommt es durch die Freisetzung von heißem Dampf und Gasen einerseits zu einem Druckanstieg und andererseits zu einem Temperaturanstieg im Inneren des Anlagenraumes 18, wobei weiterhin der Wasserstoffgehalt der Raumluft oder die Konzentration anderer zündfähiger Gase ansteigen kann. Der im Anlagenraum 18 herrschende Druck oder der Differenzdruck zum Betriebsraum 20 sowie die Atmosphärentemperatur sind daher für eine Überwachung der kerntechnischen Anlage 4 auf das Auftreten von Störfällen besonders relevante und geeignete Parameter. Die Verschlussvorrichtungen 26 sind derart ausgelegt und konstruiert, dass sie automatisch ansprechen und die Öffnung der Überströmquerschnitte bewirken, sobald einer oder mehrere der genannten Betriebsparameter (Druck, Temperatur, H₂-Konzentration) einen als Störfallindikator anzusehenden Schwellwert überschreitet. Durch die diversitäre Auslegung der Verschlussvorrichtungen 26 hinsichtlich ihrer Auslöse- und Betätigungsmechanismen wird dabei eine ausgesprochen zuverlässige und vergleichsweise großflächige Raumöffnung auch bei den wahrscheinlicheren Störfallsituationen mit vergleichsweise langsamem Druckaufbau erreicht.

Überdies sind durch die spezifische Anordnung der Überströmöffnungen 22a, 22b, 22c in der den Anlagenraum 18 vom Betriebsraum 20 abtrennenden Zwischenwand 16 im Auslösefall optimierte Strömungsverhältnisse gewährleistet, welche eine zügige und gleichmäßige Verteilung der freigesetzten zündfähigen Gase im gesamten Containment-Volumen fördern. Zum einen ist eine Anzahl von vergleichsweise tief liegenden Überströmöffnungen 22a mit druck- und temperatursensitiven, im Auslösefall selbsttätig öffnenden Verschlussvorrichtungen 26 in vertikaler Einbauweise im unteren Drittel des 18 vorgesehen. Zum anderen sind mehrere derartige Verschlussvorrichtungen in den Überströmöffnungen 22b der Decke 36 oberhalb der Dampferzeuger 12 angeordnet (horizontale Einbauweise) und bilden dabei gewissermaßen eine Überströmdecke. Um die möglicherweise im Anlagenraum 18 vorherrschende Temperaturstratifikation angemessen zu berücksichtigen, sind die Auslösetemperaturen der hoch liegenden Verschlussvorrichtungen 26 mit etwa 90 °C höher gewählt als die der tief liegenden, die etwa 65 °C betragen. Weiterhin sind im bodennahen Bereich motorbetätigte Überströmklappen 38 in die dortigen Überströmöffnungen 22c eingebaut, die normalbetrieblich jeweils durch einen Elektromotor 40 geschlossen gehalten werden und die im Auslösefall, d. h. bei abgeschaltetem oder spannungslosem Elektromotor 40, nach dem Fail-Safe-Prinzip durch Federkraft oder Gewichtskraft öffnen.

Wie bereits geschildert ist durch die Diversifizierung der Auslösemechanismen sichergestellt, dass bei einem Störfall im Kernbereich des Reaktors oder im Primärkühlkreislauf 10 die überwiegende oder doch zumindest eine relevante Anzahl von Verschlussvorrichtungen 26 oder Verschlusselementen 24 öffnet. Damit stellt sich dann der im rechten Teil der Fig. 1 durch Strömungspfeile 42 veranschaulichte Strömungsverlauf ein, bei dem die heißen Gase und Dämpfe aus den hoch liegenden Überströmöffnungen 22b in der Decke 36 des Anlagenraumes 18 nach oben entweichen, sich an der darüber liegenden Decke des Sicherheitsbehälters 2 abkühlen und anschließend in dem ringförmigen Zwischenraum 44 zwischen der Zwischenwand 16 und der Innenwand des Sicherheitsbehälters 2 nach unten sinken, um schließlich wieder durch die geöffneten Überströmquerschnitte 22a, 22c in den Anlagenraum 18 einzuströmen. Durch die Zirkulation der Strömung findet eine ausgesprochen effektive Vermischung der zuvor separierten "inneren" und "äußeren" Containment-Atmosphäre statt, durch die die maximalen Konzentrationen detonationsfähiger Gase oder Gasgemische, die die Integrität oder Stabilität des Sicherheitsbehälters 2 gefährden könnten, sicher begrenzt werden.

Der Strömungsquerschnitt in Zwischenraum 44 zwischen der Zwischenwand 16 und der Innenwand des Sicherheitsbehälters 2 wird durch Abschirmelemente 114 verengt, wodurch sich eine besonders vorteilhafte Strömungsführung ergibt. Im Ausführungsbeispiel bilden die Abschirmelemente 114 in ihrer Gesamtheit eine Art Ringblende, die in der Zwischenwand 16, etwa bei einem Drittel der Höhe des 18, montiert ist. Der verbleibende freie Konvektionsquerschnitt oder Zuströmungsquerschnitt 115 ist etwa drei so groß wie der wie der Einströmungsquerschnitt der unterhalb der Abschirmelemente 114 liegenden Überströmöffnungen 22 a, 22 c.

Darüber hinaus wird eine Mehrzahl von katalytischen Rekombinatoren 46 zum Abbau des freigesetzten Wasserstoffs eingesetzt, die bevorzugt an der Innenwand des Anlagenraums 18, insbesondere um die Dampferzeuger 12 herum, angeordnet sind, so dass sie bei geöffneter Überströmdecke 36 von der nach oben steigenden Atmosphäre mit vergleichsweise hoher Eintrittsgeschwindigkeit angeströmt werden. Der Abbau des Wasserstoffs ist dann besonders effektiv. Bedingt durch die Reaktionswärme gelingt eine Erhöhung der Überströmgeschwindigkeiten in den hoch liegenden, deckenseitigen Überströmquerschnitten auf Werte von bis zu 2 m/s oder mehr. Schließlich sind zumindest einige der Rekombinatoren 46 derart in der Nähe der temperatursensitiven Verschlussvorrichtungen 26 angeordnet, dass die von ihnen bei H₂-Anfall erzeugte Reaktionswärme zur Überschreitung der Auslösetemperatur, d. h. zur Öffnung der jeweiligen Überströmöffnung führt, selbst bei ansonsten eher niedriger Raumtemperatur. Durch diese Mehrfachnutzung der in der kerntechnischen Anlage 4 zum Einsatz kommenden Rekombinatoren 46 ist also auf einfache und kostengünstige Weise ein zusätzlicher, von der Wasserstoffkonzentration abhängiger Auslösemechanismus für die Verschlussvorrichtungen 26 verwirklicht.

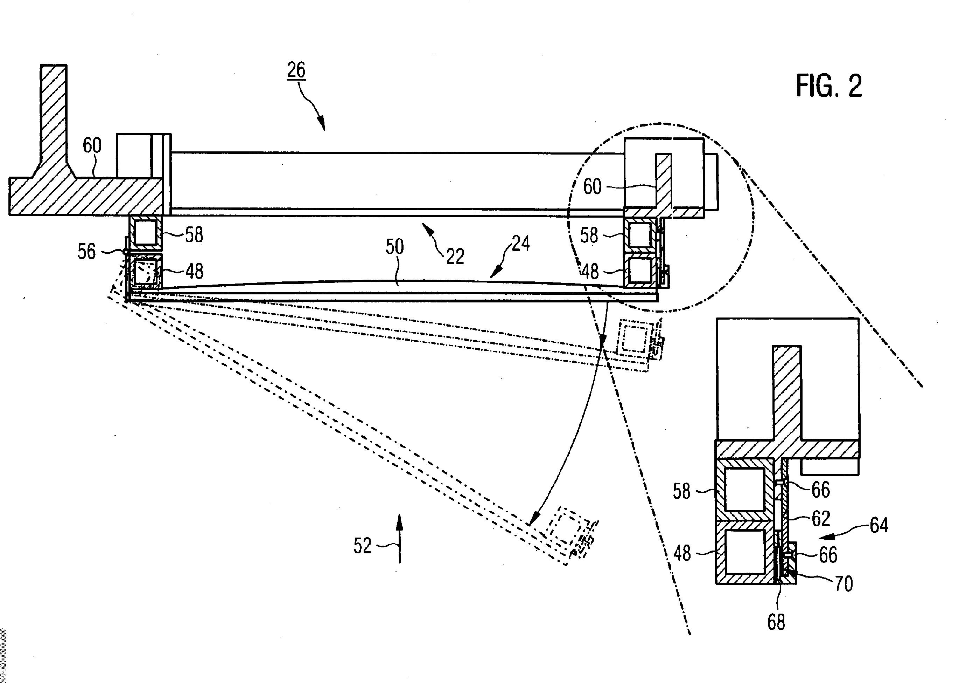

In Fig. 2 ist beispielhaft eine die beiden Funktionen druckabhängiges Öffnen und temperaturabhängiges Öffnen in sich vereinigende Verschlussvorrichtung 26 dargestellt. Bei der hier gezeigten Ausführung ist die Verschlussvorrichtung 26 besonders für einen horizontalen Einbau in der Decke 36 bzw. der Deckenwand des 18 der kerntechnischen Anlage 4 geeignet; es sind aber auch Abwandlungen mit schräger oder vertikaler Einbaulage, z. B. in einer Seitenwand, denkbar.

Die Verschlussvorrichtung 26 umfasst ein zur Abdeckung einer Überströmöffnung 22 vorgesehenes Verschlusselement 24, welches eine in einem ersten Rahmenelement 48 eingespannte Berstfolie 50 aufweist. Das Rahmenelement 48 besitzt in der Draufsicht aus der mit dem Richtungspfeil 52 bezeichneten Richtung eine rechteckige Grundfläche. Das Rahmenelement 48 selbst ist aus im Querschnitt quadratischen Hohlträgern oder unter Verwendung anderer, z. B. offener Stahlprofile (L, U-Profilkombinationen) gebildet. Das die Berstfolie 50 tragende erste Rahmenelement 48 ist mit Hilfe von Scharnieren 56 schwenkbar an einem zweiten Rahmenelement 58 befestigt, so dass sich das komplette Verschlusselement 24 im Bedarfsfall in der Art eines Türflügels oder Klappfensters gegenüber dem fest mit der Abdicht- und Haltekonstruktion 60 verbundenen zweiten Rahmenelement 58, welches zugleich als Auflager und Anschlag für das erste Rahmenelement 48 dient, aufklappen lässt. Die Abdicht- und Haltekonstruktion 60 ihrerseits ist fest in einer hier nicht gezeigten Betondecke oder Zwischenwand der kerntechnischen Anlage verankert. Die beiden Rahmenelemente 48, 58 sind unterhalb der Haltekonstruktion 60 angeordnet, so dass das Verschlusselement 24 im Auslösefall frei nach unten aufklappen kann.

Im Normalbetrieb der kerntechnischen Anlage 4 wird das Verschlusselement 24 gasdicht verschlossen gehalten, befindet sich also in der obersten der drei in Fig. 2 dargestellten, den Bewegungsablauf beim Öffnungsvorgang andeutenden Positionen. Die beiden Rahmenelemente 48, 58 liegen dann deckungsgleich aufeinander, wobei durch die Bereitstellung eines ausreichenden Anpressdrucks und gegebenenfalls durch hier nicht näher dargestellte Dichtmittel eine hohe Gasdichtigkeit erzielt wird. Dieser geschlossene Zustand wird normalbetrieblich mit Hilfe einer ein Schmelzlot 62 umfassenden Verriegelungsvorrichtung 64 aufrecht erhalten, die der scharnierbewehrten Seite der beiden Rahmenelemente 48, 58 gegenüberliegend an selbigen angebracht ist. Das stab- oder bandförmige Schmelzlot 62 ist, wie in der Detaildarstellung rechts unten in Fig. 2 gut erkennbar ist, an seinen beiden Enden jeweils mit Hilfe einer Befestigungsschraube 66 mit dem ersten, beweglich montierten Rahmenelement 48 einerseits und mit dem unbeweglichen zweiten Rahmenelement 58 bzw. der ortsfesten Abdicht- und Haltekonstruktion 60 andererseits fest verbunden und verhindert so im Normalfall die Öffnung des Verschlusselementes 24. Zudem kann durch eine mittels einer Verstellschraube 68 justierbaren Spannvorrichtung 70 der zwischen den beiden Rahmenelementen 48, 58 vorherrschende Anpressdruck eingestellt werden, wodurch die Dichtigkeit der Anordnung nachregulierbar ist. Die Schmelzloteinrichtung kann günstigerweise aus einer Anordnung von mehreren, parallelen Schmelzloten bestehen, die (kammähnlich) mit einem Abstand von wenigen mm montiert sind und so das Aufbringen größerer Verschlußkräfte im Normalbetrieb der Anlage ermöglichen. Eine derartige Ausgestaltung ist weiterhin zur Aufnahme von katalytischen Elementen im Spaltbereich zwischen den einzelnen Schmelzlotstreifen besonders geeignet.

Der Schmelzpunkt des Schmelzlotes 62 ist derart gewählt, dass das Verschlusselement 24 freigegeben wird, sobald die Raumtemperatur am Ort des Schmelzlotes 62 einen spezifisch vorgegebenen, auf die Überströmöffnung abgestimmten Auslösewert überschreitet. Das heißt, das Schmelzlot 62 wird in seinem mittleren Bereich zwischen den beiden fest eingespannten oder verschraubten Enden durch den einsetzenden Schmelzvorgang zertrennt, woraufhin das Verschlusselement 24 in Folge seines Eigengewichtes und dank seines "hängenden" Einbaus nach unten klappt und die Überströmöffnung 22 zur Durchströmung freigibt. Nach einer erfolgten Auslösung lässt sich der ursprüngliche Zustand durch Einsetzen eines neuen Schmelzlotes 62 leicht wieder herstellen. Außerdem kann durch den Austausch der Schmelzloteinrichtung 62 auch leicht eine sich wiederholende Funktionsprüfung dieser Elemente durchgeführt werden, sowie die Auslösetemperatur verändert und beispielsweise an veränderte Betriebsbedingungen der kerntechnischen Anlage 4 oder an veränderte Sicherheitsbestimmungen usw. angepasst werden.

Alternativ zur temperaturabhängigen Entriegelung und Öffnung des Verschlusselementes 24 kann bei Erreichen des Berstdruckes auch eine Öffnung des Überströmquerschnittes durch das Bersten der Berstfolie 50 erfolgen.

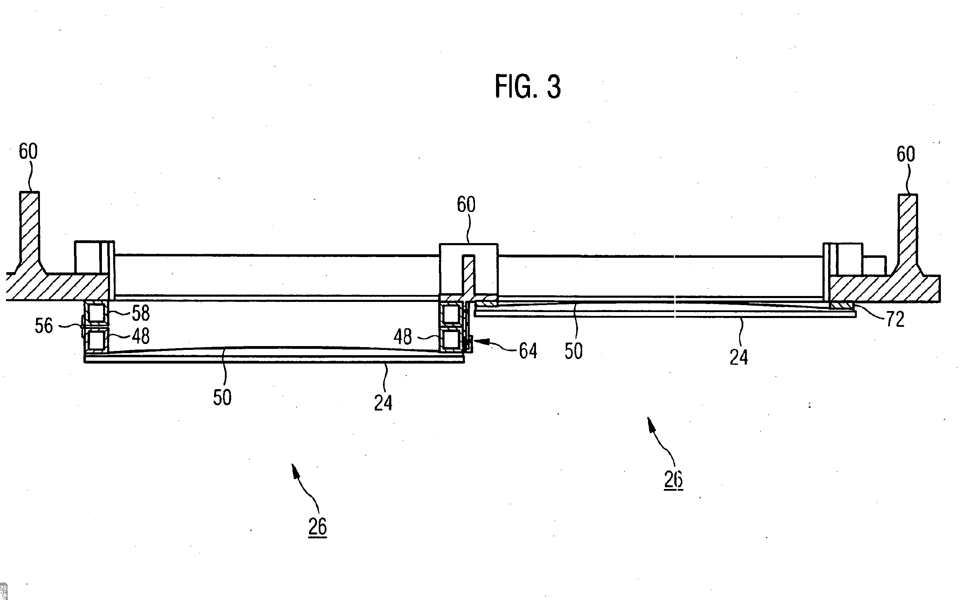

Fig. 3 zeigt eine Kombination zweier unmittelbar nebeneinander in einer Überströmdecke 36 angeordneter Verschlussvorrichtungen 26, von denen die linke in ihrem Aufbau und ihrer Funktionsweise der aus Fig. 2 bekannten Verschlussvorrichtung 26 entspricht, die rechte jedoch etwas einfacher als rein drucksensitive Verschlussvorrichtung 26 mit einer an einem feststehenden Rahmen 72 eingespannten Berstfolie 50 ausgestaltet ist. Generell genügt es für viele Einsatzbereiche und Anwendungszwecke, nur bei einem Teil der Verschlussvorrichtungen 26 diversitäre Auslöse- und Öffnungsmechanismen vorzusehen, wodurch der Gesamtaufwand für die Konzeption, Fertigstellung und Wartung der kerntechnischen Anlage 4 vergleichsweise gering gehalten werden kann.

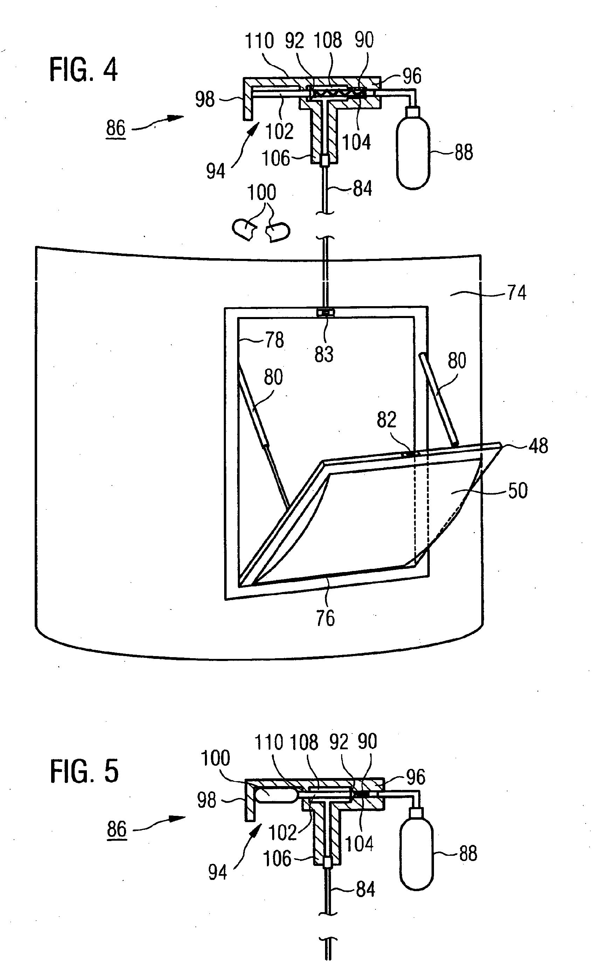

In Fig. 4 ist eine alternative Ausführungsform einer Verschlussvorrichtung 26 dargestellt, die sich besonders für einen Einsatzort im Bereich geringerer Störfall- bzw. Unfalltemperaturen, z. B. für einen vertikalen Einbau in einer Seitenwand 74 oder in einem Abschnitt der Zwischenwand 16 eignet. Ähnlich wie die aus Fig. 3 bekannte Verschlussvorrichtung 26 umfasst diese Variante eine an einem Rahmenelement 48 fixierte Berstfolie 50. Das Rahmenelement 48 ist mittels einer Anzahl von hier nicht sichtbaren Scharnieren 56 an seiner unten liegenden Längsseite 76 drehbar an einer in die Stahlbetonwand eingesetzten rahmenartigen Tragkonstruktion 78 gelagert, so dass es bei freigegebener Verriegelung im Wesentlichen durch sein Eigengewicht getrieben in die hier gezeigte Öffnungsstellung, herunterklappen kann. Unterstützt wird der Öffnungsvorgang, insbesondere in seiner Anfangsphase, durch die beiden seitlich angeordneten, jeweils endseitig am beweglichen Rahmenelement 48 und an der Wand 74 gelenkig befestigten Teleskopfederelemente 80.

Im Normalfall wird das Rahmenelement 48 durch ein an der den Scharnieren 56 gegenüberliegenden Seite der Trag- und Haltekonstruktion 78 angebrachtes und dabei in ein korrespondierendes Beschlagteil 82 des Rahmenelementes 48 eingreifendes Verriegelungselement 83 verschlossen gehalten. Im vorliegenden Fall handelt es sich um ein pneumatisches Verriegelungselement 83, das bei Beaufschlagung mit Druckluft entriegelt. Das Verriegelungselement 83 ist dazu über eine im Normalbetrieb der kerntechnischen Anlage 4 drucklose Rohrleitung 84 an eine temperaturabhängige Auslösevorrichtung 86 gekoppelt, die im Auslösefall den zur Entriegelung des Verriegelungselementes 83 notwendigen Betätigungsdruck bereitstellt. Die Auslösevorrichtung 86 kann relativ zum Verriegelungselement 83 günstigerweise in einem Bereich höherer Störfalltemperaturen angeordnet sein und je nach Leitungslänge der Rohrleitung 84 auch als Fernauslösevorrichtung konzipiert sein.

Die Auslösevorrichtung 86, die in Fig. 5 vor und in Fig. 4 nach dem Auslösevorgang dargestellt ist, umfasst einen mit einem unter Druck stehenden Gas befüllten Druckgasbehälter 88, der auslassseitig durch ein Sperrventil 90 verschließbar ist. Im Normalfall, d. h. vor Erreichen der Auslösebedingung, wird der federbelastete Ventilstößel 92 des Sperrventils 90 durch eine Glaskolbensicherung 94 im geschlossenen Zustand gehalten. Die Sicherung 94 kann beispielsweise als Glaskolben ausgeführt sein und umfasst dazu einen außerhalb des Ventilgehäuses 96 angeordneten und durch einen Anschlag 98 in seiner Position fixierten Glaskolben 100, an dem eine auf den Ventilstößel 92 drückende und diesen dabei in der Verschlussstellung fixierende Betätigungsstange 102 befestigt ist. Der Glaskolben 100 ist aus einem Glasmaterial gefertigt, das bei Erreichen einer vorgegebenen Auslösetemperatur, typischerweise 65 °C bis 90 °C, schmilzt oder zerspringt, so dass der zuvor blockierte Ventilstößel 92 freigegeben wird. In Folge des Überdrucks im Druckgasbehälter 88 und noch unterstützt durch die Federkraft der Druckfeder 104 öffnet der Ventilstößel 92, so dass das im Druckgasbehälter 88 befindliche Gas aus diesem ausströmen und zuerst in einen von einem Gehäuse 106 umgebenen Zwischenraum 108 und anschließend in die mit dem pneumatischen Verriegelungselement 83 verbundene Rohrleitung 84 einströmen kann, wodurch das Verriegelungselement 83 entriegelt und das in der Wand 74 angeordnete Verschlusselement 24 öffnet.

Bei der hier vorliegenden Ausführungsform befindet sich der Glaskolben 100 außerhalb des Zwischenraumes 108, wobei die Betätigungsstange 102 durch eine entsprechende Ausnehmung 110 der Gehäusewand geführt ist. Die Betätigungsstange 102 ist in ihrer Längsrichtung in der Ausnehmung 110 verschieblich. Der Spalt zwischen der Betätigungsstange 102 und dem Gehäuse 106 ist klein gehalten und mit Hilfe eines am Rand der Ausnehmung 110 fixierten, hier nicht näher dargestellten Dichtringes oder dergleichen abgedichtet, so dass an dieser Stelle kein leckbedingter Druckverlust auftritt.

Die vorgenannte Funktion der Fernauslösung kann auch durch hydraulische Einrichtungen oder Seilzugsysteme erreicht werden.

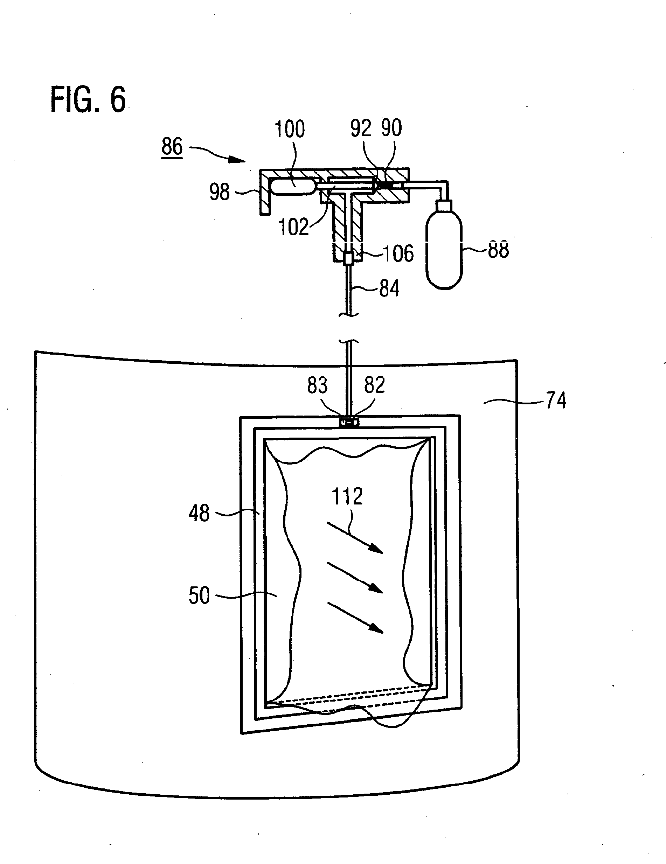

Fig. 6 zeigt schließlich noch einmal die aus Fig. 4 bekannte Verschlussvorrichtung 26, nun allerdings nach einer druckbedingten Auslösung, die bei geschlossen gehaltenem Rahmenelement 48 zu einem Reißen oder Bersten der Berstfolie 50 geführt hat. Die Pfeile 112 deuten die sich einstellende Strömung an.

### Bezugszeichenliste

- 1: Längsachse
- 2: Sicherheitsbehälter
- 4: kerntechnische Anlage
- 8: Reaktordruckbehälter
- 10: Primärkühlkreislauf
- 12: Dampferzeuger
- 14: Innenraum
- 16: Zwischenwand
- 18: Anlagenraum
- 20: Betriebsraum
- 22a, 22b, 22c: Überströmöffnung
- 24: Verschlusselement
- 26: Verschlussvorrichtung
- 28: Absaugvorrichtung
- 30: Absaugleitung
- 32: Saugpumpe
- 34: Reinigungsvorrichtung
- 36: Decke
- 38: Überströmklappe
- 40: Elektromotor
- 42: Strömungspfeil
- 44: Zwischenraum
- 46: Rekombinator
- 48: Rahmenelement
- 50: Berstfolie
- 52: Richtungspfeil
- 56: Scharnier
- 58: Rahmenelement
- 60: Abdicht- und Haltekonstruktion
- 62: Schmelzlot
- 64: Verriegelungsvorrichtung
- 66: Befestigungsschraube
- 68: Verstellschraube
- 70: Spannvorrichtung
- 72: Rahmen
- 74: Seitenwand
- 76: Längsseite
- 78: Tragkonstruktion
- 80: Teleskopfederelement
- 82: Beschlagteil
- 83: Verriegelungselement
- 84: Rohrleitung
- 86: Auslösevorrichtung
- 88: Druckgasbehälter
- 90: Sperrventil
- 92: Ventilstößel
- 94: Glaskolbensicherung
- 96: Ventilgehäuse
- 98: Anschlag
- 100: Glaskolben
- 102: Betätigungsstange
- 104: Druckfeder
- 106: Gehäuse
- 108: Zwischenraum
- 110: Ausdehnung
- 112: Pfeil
- 114: Abschirmung
- 115: Zuströmquerschnitt

## Patentansprüche

1. Kerntechnische Anlage (4) mit einem Sicherheitsbehälter, dessen Innenraum durch eine gasdichte Zwischenwand (16) in einen den Reaktordruckbehälter (8) und den Primärkühlkreislauf (10) enthaltenden Anlagenraum (18) und in einen im Normalbetrieb begehbaren Betriebsraum (20) unterteilt ist, wobei in der Zwischenwand (16) eine Anzahl von Überströmöffnungen (22a, 22b, 22c) enthalten ist, wobei die jeweilige Überströmöffnung (22a, 22b, 22c) durch ein Verschlusselement (24) einer bei Erreichen einer der jeweiligen Überströmöffnung (22a, 22b, 22c) zugeordneten Auslösebedingung selbsttätig öffnenden Verschlussvorrichtung (26) verschlossen ist,
**dadurch gekennzeichnet, dass**
mindestens eine Verschlussvorrichtung (26) derart ausgelegt ist, dass sie selbsttätig öffnet, sobald die Druckdifferenz zwischen Anlagenraum (18) und Betriebsraum (20) einen vorgegebenen Auslösewert im Bereich von 20 mbar bis 300 mbar überschreitet, und dass sie selbsttätig öffnet, sobald die lokale Atmosphärentemperatur an einer zugeordneten Messposition des Anlagenraumes (18) eine vorgegebene Auslösetemperatur im Bereich von 65 °C bis 90 °C übersteigt.

2. Kerntechnische Anlage (4) nach Anspruch 1, bei der mindestens eine Verschlussvorrichtung (26) derart ausgelegt ist, dass sie selbsttätig öffnet, sobald der Atmosphärendruck im Anlagenraum (18) einen vorgegebenen Auslösedruck überschreitet.

3. Kerntechnische Anlage (4) nach einem der Ansprüche 1 bis 2, bei der ein Verschlusselement (24) über eine Fernbetätigungsvorrichtung an eine in der Nähe der Decke des Anlagenraumes (18) positionierte temperaturabhängige Auslösevorrichtung (86) gekoppelt ist.

4. Kerntechnische Anlage (4) nach einem der Ansprüche 1 bis 3, bei der mindestens eine Verschlussvorrichtung (26) derart ausgelegt ist, dass sie selbsttätig öffnet, sobald die Konzentration eines in der Atmosphäre des Anlagenraumes (18) anwesenden brennbaren oder explosionsfähigen Gases, insbesondere die Wasserstoffkonzentration, eine vorgegebene Auslösekonzentration überschreitet.

5. Kerntechnische Anlage (4) nach einem der Ansprüche 1 bis 4 mit einer temperaturabhängig öffnenden Verschlussvorrichtung (26) und mit einem bei Anwesenheit von Wasserstoff Wärme freisetzenden Rekombinator (46), wobei der Rekombinator (46) derart angeordnet ist, dass die von ihm freigesetzte Wärme bei Überschreiten eines Schwellwertes die Öffnung der Verschlussvorrichtung (26) auslöst.

6. Kerntechnische Anlage (4) nach einem der Ansprüche 1 bis 5, bei der eine erste Teilmenge (22a, 22c) der jeweils mit einer der Verschlussvorrichtungen (26) versehenen Überstromöffnungen (22a, 22b, 22c) im unteren Drittel des Anlagenraumes (18) und eine zweite Teilmenge (22b) in den die Decke des Anlagenraumes (18) bildenden Abschnitten der Zwischenwand (16) angeordnet ist, wobei die Höhendifferenz zwischen den Überströmöffnungen der ersten Teilmenge (22a, 22c) und den Überströmöffnungen der zweiten Teilmenge (22b) mehr als 5 m, vorzugsweise mehr als 20 m, beträgt.

7. Verschlussvorrichtung (26) für eine in einer Wand angeordnete Überströmöffnung (22a, 22b, 22c), nämlich zum Einsatz in einer kerntechnischen Anlage (4) nach einem der Ansprüche 1 bis 6, mit einem ein Berstelement, insbesondere eine Berstfolie (50) oder Berstscheibe, umfassenden Verschlusselement (24), wobei die Verschlussvorrichtung (26) eine im temperaturbedingten Auslösefall unmittelbar auf die Berstfolie (50) oder die Berstscheibe einwirkende und zu deren Reißen führende Betätigungsvorrichtung umfasst, **dadurch gekennzeichnet, dass** sie bei Erreichen einer vorgegebenen umgebungsseitigen Auslösetemperatur im Bereich von 65 °C bis 90 °C den Strömungsquerschnitt selbsttätig freigibt, und das Berstelement bei einer anliegenden Druckdifferenz im Bereich von 20 mbar bis 300 mbar öffnet.

8. Verschlussvorrichtung (26) nach Anspruch 7 mit einer federgetriebenen Betätigungsvorrichtung.

9. Verschlussvorrichtung (26) nach Anspruch 7 oder 8 mit einer die Betätigungsvorrichtung vor dem Erreichen der Auslösetemperatur blockierenden oder in ihrer Wirkung kompensierenden Verriegelungsvorrichtung.

10. Verschlussvorrichtung (26) für eine in einer Wand angeordnete Überströmöffnung (22a, 22b, 22c), nämlich zum Einsatz in einer kerntechnischen Anlage (4) nach einem der Ansprüche 1 bis 6, mit einem ein Berstelement, insbesondere eine Berstfolie (50) oder Berstscheibe, umfassenden Verschlusselement (24), wobei das Berstelement an einem drehbar oder schwenkbar an der Wand befestigten Rahmenelement (48) befestigt oder eingespannt ist, wobei das Rahmenelement (48) durch in Verriegelungselement (83) in der geschlossenen Stellung fixierbar ist, und **dadurch gekennzeichnet, dass** das Verriegeiungseiement (83) derart ausgelegt oder an eine temperaturabhängige Auslösevorrichtung (86) gekoppelt ist, dass es bei Erreichen einer Auslösetemperatur im Bereich von 65 °C bis 90 °C entriegelt, und wobei das Berstelement bei einer anliegenden Druckdifferenz im Bereich von 20 mbar bis 300 mbar öffnet.

11. Verschlussvorrichtung (26) nach Anspruch 10 mit einer entfernt vom Verschlusselement (24) angeordneten und im Auslösefall über eine mechanische oder pneumatische Fernbetätigungsvorrichtung auf das Verschlusselement (24) oder das Verriegelungselement (83) einwirkenden Auslösevorrichtung (86), vorzugsweise einer temperatur- oder konzentrationssensitiven Auslösevorrichtung.

12. Verschlussvorrichtung (26) nach Anspruch 10 oder 11, deren Verriegelungselement (83) oder Auslösevorrichtung (86) ein Schmelzlot (62) oder eine Schmelzkapsel umfasst.

## Claims

1. A nuclear facility (4) having a containment whose interior is divided by a gas-tight parting wall (16) into a facility room (18) containing the reactor pressure vessel (8) and the primary coolant circuit (10) and a service room (20) which in normal operation is accessible, a plurality of overflow openings (22a, 22b, 22c) being contained in the parting wall (16), each overflow opening (22a, 22b, 22c) being closed by an obturation element (24) of an obturation device (26) which automatically opens as soon as a release condition associated with each overflow opening (22a, 22b, 22c) is reached,
**characterized in that**
at least one obturation device (26) is designed such that it opens automatically as soon as the pressure differential between the facility room (18) and the service room (20) exceeds a predefined release value in the range of 20 mbar to 300 mbar and that it opens automatically as soon as the local atmospheric temperature at an associated measuring position of the facility room (18) exceeds a predefined release temperature in the range of 65°C to 90°C.

2. The nuclear facility (4) of claim 1, wherein at least one obturation device (26) is designed such that it opens automatically as soon as the atmospheric pressure in the facility room (18) exceeds a predefined release pressure.

3. The nuclear facility (4) of any of claims 1 to 2, wherein an obturation element (24) is coupled, via a remote-control device, to a temperature-dependent release device (86) positioned near the ceiling of the facility room (18).

4. The nuclear facility (4) of any of claims 1 to 3, wherein at least one obturation device (26) is designed such that it opens automatically as soon as the concentration of a flammable or explosive gas, in particular the hydrogen concentration, present in the atmosphere of the facility room (18) exceeds a predefined release concentration.

5. The nuclear facility (4) of any of claims 1 to 4, having an obturation device (26) which opens in a temperature-dependent manner and having a recombiner (46) liberating heat in the presence of hydrogen, wherein the recombiner (46) is arranged such that the heat liberated by it triggers the opening of the obturation device (26) when a threshold value is exceeded.

6. The nuclear facility (4) of any of claims 1 to 5, wherein a first subset (22a, 22c) of the overflow openings (22a, 22b, 22c) each of which is provided with one of the obturation devices (26) are arranged in the lower third of the facility room (18), and a second subset (22b) are arranged in the sections of the parting wall (16) forming the ceiling of the facility room (18), the difference in height between the overflow openings of the first subset (22a, 22c) and the overflow openings of the second subset (22b) amounting to more than 5 m, preferably more than 20 m.

7. An obturation device (26) for an overflow opening (22a, 22b, 22c) arranged in a wall, namely for use in a nuclear facility (4) of any of claims 1 to 6, having an obturation element (24) comprising a bursting element, in particular a bursting foil (50) or bursting disk, the obturation device (26) comprising an actuating device acting directly upon the bursting foil (50) or bursting disk and leading to its rupture in the temperature-conditioned release case,
**characterized in that**
it automatically frees the cross-section of flow as soon as a predefined ambient release temperature in the range of 65°C to 90°C is reached and that the bursting element opens when a pressure differential in the range of 20 mbar to 300 mbar is applied.

8. The obturation device (26) of claim 7, having a spring-driven actuating device.

9. The obturation device (26) of claim 7 or 8, having a locking device which blocks or compensates the effect of the actuating device prior to reaching the release temperature.

10. An obturation device (26) for an overflow opening (22a, 22b, 22c) arranged in a wall, namely for use in a nuclear facility (4) of any of claims 1 to 6, having an obturation element (24) comprising a bursting element, in particular a bursting foil (50) or bursting disk, wherein the bursting element is fastened or clamped on a frame element (48) fastened on the wall in a rotatable or pivotable manner, wherein the frame element (48) can be fixed in the closed position by means of a locking element (83),
**characterized in that**
the locking element (83) is designed or coupled to a temperature-dependent release device (86) in such a way that it is unlocked as soon as a release temperature in the range of 65°C to 90°C is reached and that the bursting element opens when a pressure differential in the range of 20 mbar to 300 mbar is applied.

11. The obturation device (26) of claim 10, having a release device (86), preferably a temperature or concentration-sensitive release device, which is arranged remote from the obturation element (24) and acts upon the obturation element (24) or the locking element (83) in the release case via a mechanical or pneumatic remote actuating device.

12. The obturation device (26) of claim 10 or 11, whose locking element (83) or release device (86) comprises a fusible solder (62) or a fusible capsule.

## Revendications

1. Installation nucléaire (4) ayant une enceinte de sécurité dont l'intérieur est divisé par une paroi de séparation (16) étanche au gaz, en une chambre d'installation (18) contenant la cuve du réacteur (8) et le circuit de refroidissement primaire (10), et une chambre de service (20) qui est accessible en fonctionnement normal, une pluralité d'ouvertures de trop-plein (22a, 22b, 22c) étant contenue dans la paroi de séparation (16), chaque ouverture de trop-plein (22a, 22b, 22c) étant obturée par un élément d'obturation (24) d'un dispositif d'obturation (26) qui ouvre automatiquement dès qu'une condition de déclenchement affectée à chaque ouverture de trop-plein (22a, 22b, 22c) sera atteinte,
**caractérisé en ce**
**qu'**au moins un dispositif d'obturation (26) est étudié de façon à ce qu'il ouvre automatiquement dès que le différentiel de entre la chambre d'installation (18) et la chambre de service (20) excédera une valeur de déclenchement prédéfinie dans la gamme de 20 mbar à 300 mbar et qu'il ouvre automatiquement dès que la température atmosphérique locale à une position de mesure y affectée de la chambre d'installation (18) excédera une température de déclenchement prédéfinie dans la gamme de 65°C à 90°C.

2. Installation nucléaire (4) selon la revendication 1, dans laquelle au moins un dispositif d'obturation (26) est étudié de façon à ce qu'il ouvre automatiquement dès que la pression atmosphérique dans la chambre d'installation (18) excédera une pression de déclenchement prédéfinie.

3. Installation nucléaire (4) selon l'une quelconque des revendications 1 à 2, dans laquelle un élément d'obturation (24) est couplé, au moyen d'un dispositif de commande à distance, à un dispositif déclencheur (86) variable avec la température et positionné près du plafond de la chambre d'installation (18).

4. Installation nucléaire (4) selon l'une quelconque des revendications 1 à 3, dans laquelle au moins un dispositif d'obturation (26) étudié de façon à ce qu'il ouvre automatiquement dès que la concentration d'un gaz combustible ou explosif, en particulier la concentration d'hydrogène, présent dans l'atmosphère de la chambre d'installation (18) excédera une concentration de déclenchement prédéfinie.

5. Installation nucléaire (4) selon l'une quelconque des revendications 1 à 4, ayant un dispositif d'obturation (26) qui ouvre d'une manière variable avec la température et ayant un recombineur (46) qui dégage de la chaleur en présence d'hydrogène, dans laquelle le recombineur (46) est disposé de telle façon que la chaleur dégagée par lui déclenche l'ouverture du dispositif d'obturation (26) lorsqu'une valeur seuil est excédée.

6. Installation nucléaire (4) selon l'une quelconque des revendications 1 à 5, dans laquelle un premier sous-ensemble (22a, 22c) des ouvertures de trop-plein (22a, 22b, 22c), chacune desquelles est munie d'un des dispositifs d'obturation (26), est disposé dans le tiers inférieur de la chambre d'installation (18), et un second sous-ensemble (22b) est disposé dans les sections de la paroi de séparation (16) qui forment le plafond de la chambre d'installation (18), la différence en hauteur entre les ouvertures de trop-plein du premier sous-ensemble (22a, 22c) et les ouvertures de trop-plein du second sous-ensemble (22b) s'élevant à plus de 5 m, de préférence, de plus de 20 m.

7. Dispositif d'obturation (26) pour une ouverture de trop-plein (22a, 22b, 22c) disposée dans un mur, à savoir pour utilisation dans une installation nucléaire (4) selon l'une quelconque des revendications 1 à 6, ayant un élément d'obturation (24) comprenant un élément d'éclatement, en particulier une feuille d'éclatement (50) ou un disque d'éclatement, le dispositif d'obturation (26) comprenant un dispositif de commande agissant directement sur la feuille d'éclatement (50) ou le disque d'éclatement et menant à sa rupture dans le cas de déclenchement causé par la température,
**caractérisé en ce**
**qu'**il libère automatiquement la section de courant dès qu'une température ambiente de déclenchement prédéfinie dans la gamme de 65°C à 90°C est atteinte et que l'élément d'éclatement ouvre lorsqu'un différentiel de pression dans la gamme de 20 mbar à 300 mbar est présent.

8. Dispositif d'obturation (26) selon la revendication 7, ayant un dispositif de commande commandé par ressort.

9. Dispositif d'obturation (26) selon la revendication 7 ou 8, ayant un dispositif de verrouillage qui bloque ou compense l'effet du dispositif de commande avant d'atteindre la température de déclenchement.

10. Dispositif d'obturation (26) pour une ouverture de trop-plein (22a, 22b, 22c) disposé dans un mur, à savoir pour utilisation dans une installation nucléaire (4) selon l'une quelconque des revendications 1 à 6, ayant un élément d'obturation (24) comprenant un élément d'éclatement, en particulier une feuille d'éclatement (50) ou un disque d'éclatement, dans lequel l'élément d'éclatement est attaché ou serré sur un élément cadre (48) attaché sur le mur de manière rotative ou pivotante, dans lequel l'élément cadre (48) peut être fixé dans la position fermée au moyen d'un élément de verrouillage (83),
**caractérisé en ce**
**que** l'élément de verrouillage (83) est étudié ou couplé à un dispositif déclencheur (86) variable avec la température de façon à ce qu'il est débloqué dès qu'une température de déclenchement dans la gamme de 65°C à 90°C sera atteinte et que l'élément d'éclatement ouvre lorsqu'un différentiel de pression dans la gamme de 20 mbar à 300 mbar sera présent.

11. Dispositif d'obturation (26) selon la revendication 10, ayant un dispositif déclencheur (86), de préférence un dispositif déclencheur sensitif à la température ou à la concentration, qui est disposé éloigné de l'élément d'obturation (24) et agit sur l'élément d'obturation (24) ou l'élément de verrouillage (83) dans le cas de déclenchement au moyen d'un dispositif de commande à distance, mécanique ou pneumatique.

12. Dispositif d'obturation (26) selon la revendication 10 ou 11, dont l'élément de verrouillage (83) ou dispositif déclencheur (86) comprend une soudure fusible (62) ou une capsule fusible.
